# EUROPEAN PATENT SPECIFICATION

(11) **EP 0 609 418 B1**
(45) Date of publication and mention of the grant of the patent: **04.11.1998**
(21) Application number: 93917818.2
(22) Date of filing: 17.08.1993
(51) Int. Cl.: H04Q 7/22, H04B 7/26

(54) **A RADIO SYSTEM AND A DATA TRANSMISSION IN A RADIO SYSTEM**
FUNKSYSTEM UND DATENÜBERTRAGUNG IN EINEM FUNKSYSTEM
SYSTEME DE RADIOCOMMUNICATIONS ET TRANSMISSION DE DONNEES DANS UN SYSTEME DE RADIOCOMMUNICATIONS

(30) Priority: 18.08.1992 FI 923708
(43) Date of publication of application: 10.08.1994
(73) Proprietor: NOKIA TELECOMMUNICATIONS OY, 02150 Espoo (FI)
(72) Inventor: PAAVONEN, Tapio, FIN-43100 Saarijärvi (FI)
(74) Representative: Tomlinson, Kerry John
(86) International application number: FI9300324
(87) International publication number: WO9405125

(56) References cited:
- EP-A- 0 332 818
- US-A- 4 837 858

## Description

### Field of the Invention

The invention relates to radio systems and particularly to a data transmission in radio systems.

### Background of the Invention

For radio telephone systems according to the recommendations MPT1343 and 1327 published by the British Department of Trade and Industry (DTI) is defined a transmission of Short Data Messages (SDM) and Extended Data Messages (EDM) on a control channel among other control signalling. SDM transmission can be utilized for two-way transmission of short alphanumeric text messages or application-specific data over the network between two subscriber terminals or other devices, such as computers etc. A single SDM may include predetermined groups of characters and a corresponding maximum number of characters. An EDM comprises four interconnected SDMs at the maximum. However, since the data communication takes place on the control channel among the normal control signalling, it is associated with the drawback that the control channel is blocked in relatively simple applications already, which causes interference in the control signalling and even endangers the speech traffic of the system. For this reason, the data transmission capacity provided in this manner remains very low. For a more efficient data transmission, a separate free-format data transmission using external modems has been defined for the radio systems according to MPT1343 and 1327. For each modem call, a traffic channel is reserved in a normal way, whereby control signalling does not interfere the data transmission during the modem call. However, it is expensive and unnecessarily complicated for the customer to use external modems and to reserve an entire traffic channel, when the data transmission is occasional and requires relatively low capacity, but more than the standard SDM/EDM transmission is able to deliver.

### The Disclosure of the Invention

The object of the present invention is to increase substantially the transmission capacity of SDM/EDM-type transmission in a radio system and to avoid additional costs due to the external modems.

According to the invention, a radio system, comprising mobile radio stations and a plurality of base stations, each base station having a radio channel operating as a call channel for signalling between the base station and mobile radio stations, the mobile radio stations being capable of transmitting user data on control channels among the actual control signalling, is characterized in that the radio system comprises at least one radio channel operating like a control channel but assigned exclusively for signalling related to user data transmission, which prevents the mobile stations from selecting said radio channel as a control channel.

The basic idea of the present invention is that a mobile radio station is always commanded to a predetermined control channel (which may be referred to a data channel) for a SDM/EDM transmission. As far as the radio system is concerned, this data channel operating like a control channel is similar to the actual control channel, but the system code transmitted in its signalling and defining the current radio system for the mobile stations is selected in such a way that none of the mobile radio stations can select this radio channel to be the control channel. A plurality of mobile stations may communicate simultaneously on such a data channel and perform data transmission in the same way as on a normal control channel. The data channel lacks, however, all such normal control signalling that is not required for SDM/EDM transmission, and therefore, the capacity of the data transmission does not need to be restricted because of the control signalling. Naturally, such a control channel reserved for data transmission can also be blocked, if there is a sufficient amount of data transmission, but even then the speech traffic, which is generally considered the most important form of traffic in the radio telephone networks, is not endangered. Moreover, several channels can be reserved for the data traffic, depending on the need of capacity.

By means of the invention, a novel mode of transmitting data is provided between a normal SDM/ EDM transmission and a conventional modem call. The system differs from a radio system conforming strictly with MPT1343/1327 therein that, in connection with SDM/EDM calls, the network control shall be capable of commanding the mobile radio stations always to a predetermined dedicated data channel. Accordingly, changes are required only in the network control and small additional changes in the software of the radio telephone.

The invention relates further to a method of transmitting data in a radio system, comprising mobile radio stations and a plurality of base stations, each base station having a radio channel operating as a control channel for signalling between the base station and mobile radio stations, in which method a mobile radio station requests permission to send user data by sending a request message on the control channel to a base station, the base station grants a permission to send user data by sending an acknowledgement message on the control channel and the mobile radio station sends a user data message in response to the reception of the acknowledgement message. The method is characterized in that, after having received the request to send user data from the mobile radio station, the base station sends the mobile radio station a command to go for a data transmission to the radio channel operating like a control channel, but used only for signalling relating to user data transmission.

The invention relates also to a method of transmitting data in a radio system, comprising mobile radio stations and a p[,urality of base stations, each base station having a radio channel operating as a control channel for signalling between the base station and mobile radio stations, in which method a base station sends a packet data transmission request on the control channel to a mobile station and the mobile station sends an acknowledgement message to the base station on the control channel. The method is characterized in that, after having received the acknowledgement message from the mobile radio station on the control channel, the base station sends to the mobile radio station a command to go for a data transmission to the radio channel operating like a control channel, but used only for signalling related to user data transmission.

### A Brief Description of the Drawings

The invention will now be explained in more detail by means of illustrating embodiments with reference to the attached drawings, in which
Figure 1 illustrates one radio system, to which the invention is applied, and
Figure 2 illustrates a connection between a mobile telephone exchange and a base station, and
Figure 3 and 4 are signalling diagrams of some data transmission transactions according to the invention.

### A Detailed Description of the Invention

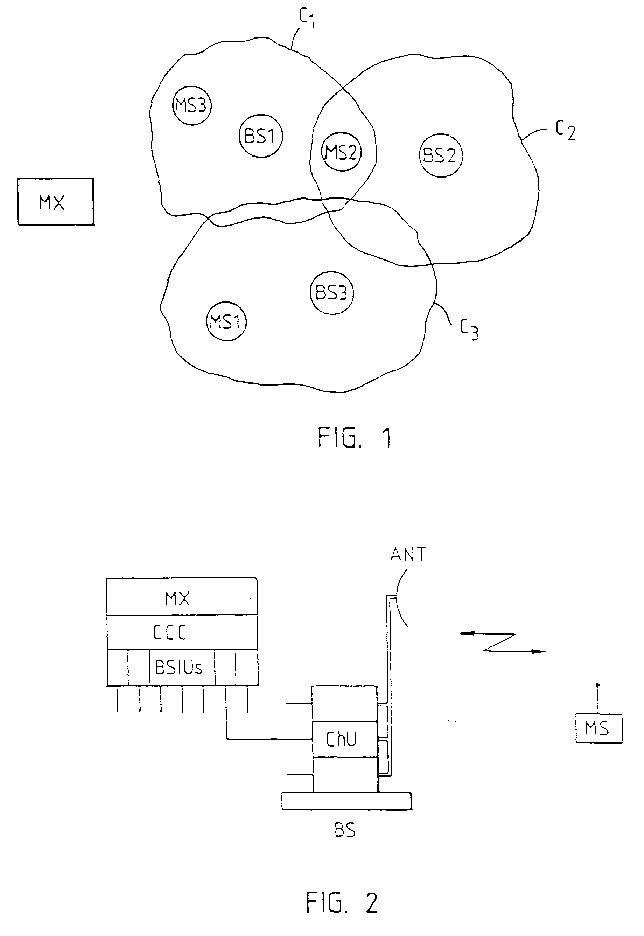

Figure 1 shows a radio telephone system, in which a geographic area covered by the system is divided into smaller radio areas, viz. radio cells C1, C2 and C3, in such a way that adjacent cells have abutting or overlapping peripheral areas. Each cell C1, C2 and C3 includes at least one fixed multichannel transceiver equipment BS1, BS2 and BS3, referred to as a base station herein. Base stations BS1, BS2 and BS3 are connected by fixed links, such as cables, to a mobile telephone exchange MX, which thus controls several base stations BS. For speech connections or data connections, frequency channels are allocated to the cells for radio connection with mobile subscriber stations in the cells, i.e. with radio telephones MS, in such a manner that at least cells close to each other have different frequencies simultaneously in use.

Figure 2 illustrates an example of an interconnection between the mobile telephone exchange MX and a base station BS. The mobile telephone exchange includes several Base Station Interface Units (BSIU), each of which operates as a link between a Call Control Computer (CCC) and a radio Channel Unit (ChU) of the base station. Each base station comprises several radio channel units ChU, each of which includes a radio transceiver. A channel unit ChU may operate on (at) one predetermined radio channel (frequency) or the mobile telephone exchange MX may allocate channels dynamically call by call by commanding the channel unit ChU to operate on the desired radio channel of the system.

An interface unit (BSIU) has four main tasks: to control access to the radio channel relating to the unit, to convert and transmit forward messages between radio units, i.e. channel units ChU, and the call control computer CCC, to connect the speech paths from the exchange MX to the radio channel as well as to control and monitor the operation of the base station. One BSIU controls one channel, which may be either a traffic channel or a control channel used by the system for control signalling, such as call setup signalling. The signalling on the control channel preferably conforms to MPT1327. Typical signalling comprises connection request messages sent by the base station and the radio telephone to each other and acknowledgements thereof as well as commands, sent by the base station, to go to a certain traffic channel for a call.

MPT1343, Section 14, defines transmission of short data messages on a control channel between radio telephones MS and a mobile telephone exchange MX over a base station BS. This defined data transmission makes it possible to send HEAD messages including free-format data on the control channel in both directions, i.e. from MS to MX and from MX to MS. Herein, the term "HEAD message" means both a HEAD address code word and associated data code words. The procedures defined in MPT1343, Section 14, support the solution according to which one segment of free-format data is sent. A segment is such an amount of free-format data that can be included in one HEAD message, as has been defined in MPT1327, Paragraph 3.1. However, it is possible to link up to four segments to each other.

A data transmission according to the specification MPT1343 takes places on a control channel as follows, when an MS is sending over MX to another MS. A calling radio unit MS requests a permission to send a short data message (SDM) by sending to a base station BS a Random Access Request (RQC) message on the control channel, which message is addressed to another radio unit, to a device in a fixed network or to a data service. The base station BS relays the message further to the mobile exchange MX. The mobile exchange MX checks the availability of the called radio unit (addressed to) by using a general availability check message AHY, before sending the calling radio unit MS a Short Data invitation message AHYC (defined in MPT1343, Paragraphs 5.5.3.2.1 and 5.5.3.2.8) on the same control channel over BS. The calling radio unit MS sends on the same control channel to the base station BS and further to the mobile exchange MX a HEAD message and up to four appended data code words. Then the mobile exchange MX forwards the data by retransmitting the same HEAD message to the called radio unit MS, which shall respond with an acknowledgement according to the procedures outlined in MPT1343, Section 14. MX sends the calling radio unit an acknowledgement to advise the receipt of the HEAD message by the called radio unit. If a group of radio units instead of a single radio unit is called, the radio units in the group do not acknowledge the HEAD message, in which case MX sends the calling radio unit an acknowledgement telling whether MX has received the HEAD message and sent it forward to the group.

If the calling MS sends data to a subscriber of the fixed network, the signalling concerning the called MS is naturally omitted from the above, and MX forwards the data to the subscriber of the fixed network.

If MX itself transmits data or delivers data from a subscriber of the fixed network, the signalling concerning the calling MS is naturally omitted from the above.

In the present invention, interference in signalling relating to call establishment and maintenance, and thereby interference in speech traffic due to the SDM/EDM transmission are prevented by reserving for data transmission a dedicated control channel, on which is sent no more control signalling than what is necessary for providing a data transmission. This signalling includes a so-called ALOHA message, which gives the radio units MS monitoring the control channel a permission to send the above-mentioned RQC message to a base station BS. Signalling messages sent by the system include an SYS code indentifying the system, on the basis of which code the radio units MS know that the radio channel belongs to their own system. The SYS code used on the control channel reserved for data transmission according to the invention is selected in such a way that no one of the radio units MS is able to select this radio channel as a control channel for monitoring and performing other signalling than signalling relating to SDM/EDM transmission. The use of the SYS code and the selection of the control channel are described in MPT1327, Section 9.

The invention will be illustrated in, the following by using as an example a SDM/EDM transmission from an MS over the radio system to another MS.

When a calling radio unit MS desires to perform an SDM/EDM transmission, it sends on a normal control channel (which is not said data transmission channel) in a normal manner an RQC message, in which it requests permission to send data. After the radio system has made sure that the called party of the data transmission (e.g. another radio unit) is available, the system commands both parties of the data transmission by a normal GO-TO-CHANNEL message to said radio channel operating like a control channel for performing the data transmission on that data channel. Several radio units may be allocated to the same data channel simultaneously, the accurate number of the radio units depending on the number of data transmission. The call control CCC of the mobile exchange MX preferably controls the amount of radio units on the data channel in such a way that the effective transmission rate of the data channel per a radio unit does not decrease too low, e.g. below a predetermined threshold.

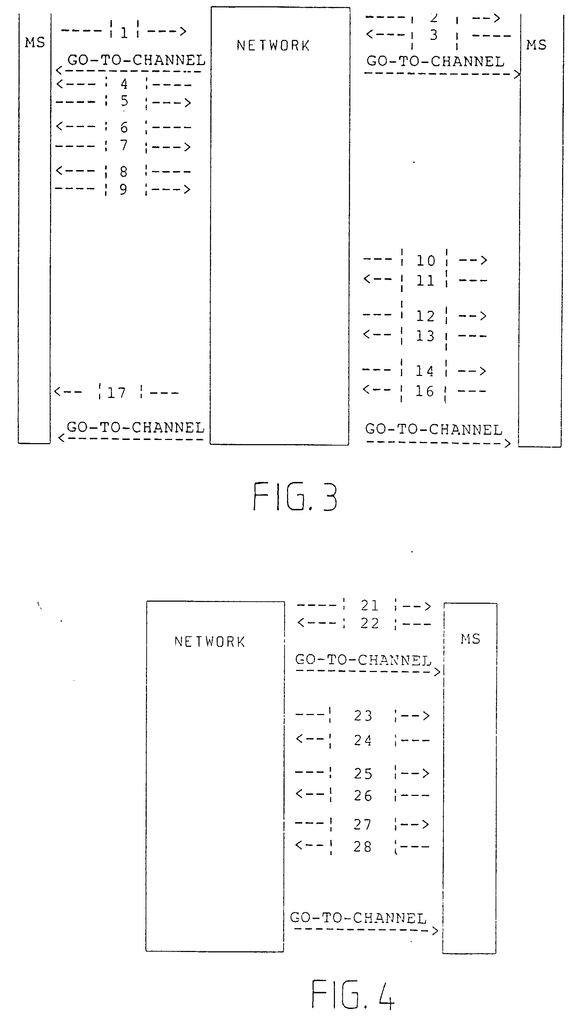

Figure 3 shows a signalling diagram illustrating an application of the present invention to a multisegment SDM/EDM transmission according to MPT1343, Section 14, between two radio units MS. At 1, a calling radio unit MS requests a SDM transmission by sending an RQC message on a normal control channel. The value of the field SLOTS of the RQC message is "11" indicating that three time slots of the channel are required for a HEAD message containing the first segment of the multisegment transmission (MST).

After having received the RQC message, at 2, the fixed network (the MXs and BSs) sends the called radio unit MS on a normal control channel an AHY message in order to check the availability of the called radio unit MS. At 3, the called MS sends on the normal control channel an ACK message to the network as an acknowledgement of the AHY message.

After this the network commands the both radio units MS for a data session to go to a radio channel reserved for data transmission and operating like a control channel by sending them on the normal control channel a GO-TO-CHANNEL command containing the number of said data transmission channel. After the radio units MS have gone to the data transmission channel, the network sends to the calling radio unit MS on the data channel an AHYC message, in which field DESC is set to state "100". The first bit of field DESC indicates that a multisegment transmission is supported. The second and third bit of the field indicate that a first data segment is requested. Field SLOTS is in state "11", which indicates that the network has reserved three time slots from the data channel for a HEAD message containing the first data segment.

At 5, the calling MS sends on the data transmission channel a HEAD message containing the first data segment. GFI field of the HEAD message indicates the data format. Field NEG = "10" indicates that two more segments will be sent. Field CSEG = "1" indicates that three time slots from the data transmission channel are required for a HEAD message containing the following segment.

At 6, the network sends the calling MS an AHYC message, in which field DESC is in state "101" requesting a HEAD message containing the second data segment. Field SLOTS is in state "11" indicating that three time slots have been reserved for the HEAD message. At 7, the calling MS sends a HEAD message containing the second data segment. Field NSEG = "01" indicates that one or several more data segment(s) will be transmitted. Field CSEG = "0" indicates that two time slots are required for a HEAD message containing the following segment.

At 8, the network sends the calling MS an AHYC message, in which field DESC = "110" requests a HEAD message containing the third data segment. Field SLOTS is in state "10" indicating that two time slots have been reserved for the HEAD message. At 9, the calling MS sends a HEAD message containing the third segment. Field NSG will not be sent or it is in state "00" indicating that all segments have been transmitted.

At 10, the network sends the called MS a HEAD message containing the first one of said data segments on the same or another data channel. At 11, the called MS sends an ACKB message as an acknowledgement, which message indicates that the HEAD message has been received successfully.

At 12, the network sends the called MS on the data channel a HEAD message containing one of said two data segments, and the called MS acknowledges a successful reception by sending an ACK message on the data channel at 13. Then, at 14, the network sends on the data channel a HEAD message containing the last data segment to the called MS, which acknowledges the reception by sending an ACK message (at 15).

Then, at 17, the network sends the calling MS an ACK message, which indicates that the data transmission has been successfully completed (17).

After the termination of the data transmission the network sends in a GO-TO-CHANNEL message a command to MS to go back to the original control channel. It is also possible that MS is allowed to stay on the data channel operating like a call cnannel for a limited time after the termination of the data transmission in order to wait for a new data transmission, if the network knows that it is to be expected.

Figure 4 shows a signalling diagram illustrating an application of the present invention to a multisegment SDM/EDM transmission according to MPT1343, Section 14, from the network to a radio telephone MS. At 21, the fixed network (the MXs and BSs) sends the radio unit MS on a normal control channel an AHY message in order to check the availability of the called radio unit MS. At 22, the called MS sends the network on the normal control channel an ACK message as an acknowledgement of the AHY message.

Subsequently, the network commands the radio unit MS to go to the radio channel reserved for data transmission and operating like a call channel, by sending a GO-TO-CHANNEL command containing the number of said channel on the normal control channel.

Then, at 23 to 28, data is transmitted from the network to a radio telephone MS by a signalling similar to the signalling at 10 to 16 in Figure 3. After the termination of the data transmission, the network sends in a GO-TO-CHANNEL message a command to MS to go back to the original control channel.

The figures and the associated description are only intended to illustrate the present invention. As to the details, the radio system and the method according to the invention may vary within the scope of the attached claims.

## Claims

1. A radio system, comprising mobile radio stations (MS) and a plurality of base stations (BS), each base station having a radio channel operating as a control channel for signalling between the base station (BS) and mobile radio stations (MS), the mobile radio stations (MS) being capable of transmitting user data on a control channel among the actual control signalling, **characterized** in that the radio system comprises at least one radio channel operating like a control channel but assigned exclusively for signalling related to user data transmission and transmitting control signalling which prevents the mobile stations from selecting said radio channel as a control channel.

2. A method of transmitting data in a radio system, comprising mobile radio stations (MS) and a plurality of base stations (BS), each base station having a radio channel operating as a control channel for signalling between the base station (BS) and mobile radio stations (MS), in which method
a mobile radio station (MS) requests permission to send user data by sending a request message on the control channel to a base station (BS),
the base station (BS) grants a permission to send user data by sending an acknowledgement message on the control channel, and
the mobile radio station (MS) sends a user data message in response to the reception of the acknowledgement message, **characterized** in that, after having received the request to send user data from the mobile radio station, the base station (BS) sends the mobile radio station a command to go for a data transmission to a radio channel operating like a control channel, but used only for signalling related to user data transmission.

3. A method of transmitting data in a radio system, comprising mobile radio stations (MS) and a plurality of base stations (BS), each base station having a radio channel operating as a control channel for signalling between the base station (BS) and mobile radio stations (MS), in which method
a base station (BS) sends a packet data transmission request on the control channel to a mobile station (MS), and
the mobile radio station (MS) sends an acknowledgement message to the base station (BS) on the control channel,
**characterized** in that, after having received the acknowledgement message from the mobile radio station (MS) on the control channel, the base station (BS) sends to the mobile radio station a command to go for a data transmission to a radio channel operating like a control channel, but used only for signalling related to user data transmission.

4. A method according to claim 2 or 3, **characterized** in that a mobile radio station (MS) requests permission to transmit user data to another mobile radio station, the radio network checks the availability of the other mobile radio station, and the radio network commands both mobile radio stations to the radio channel reserved for user data transmission.

5. A method according to claim 2, 3 or 4, **characterized** in that several mobile radio stations (MS) communicate simultaneously with the base station (BS) on said radio channel reserved for user data transmission.

6. A method according to claim 5, **characterized** in that the number of mobile radio stations (MS) communicating simultaneously on said radio channel reserved for user data transmission is controlled in such a way that the effective transmission rate of said radio channel per one mobile radio station is not lower than a predetermined threshold.

7. A method according to any of the claims 2 to 6, **characterized** in that, after the termination of the user data transmission, the base station (BS) sends to the mobile station (MS) a command to go back to the original control channel.

8. A method according to any of the claims 2 to 6, **characterized** in that, after the termination of the user data transmission, the mobile radio station (MS) is allowed to stay on the radio channel operating like a control channel for a limited time in order to wait for a new user data transmission, if such a transmission is expected.

## Patentansprüche

1. Funksystem mit Mobilfunkstationen (MS) und einer Vielzahl von Basisstationen (BS), wobei jede Basisstation einen Funkkanal aufweist, der als Steuerkanal zum Durchführen einer Signalisierung zwischen der Basisstation (BS) und den Mobilfunkstationen (MS) betrieben wird, wobei die Mobilfunkstationen (MS) zwischen der aktuellen Steuersignalisierung Benutzerdaten über einen Steuerkanal übertragen können,
**dadurch gekennzeichnet, daß**
das Funksystem zumindest einen Funkkanal aufweist, der wie ein Steuerkanal betrieben wird, aber ausschließlich für die auf die Benutzerdaten Übertragung bezogene Signalisierung eingesetzt wird, und der eine Steuersignalisierung überträgt, durch die eine Auswahl des Funkkanals als Steuerkanal durch die Mobilstationen verhindert wird.

2. Verfahren zur Datenübertragung in einem Funksystem mit Mobilfunkstationen (MS) und einer Vielzahl von Basisstationen (BS), wobei jede Basisstation einen Funkkanal aufweist, der als Steuerkanal zum Durchführen einer Signalisierung zwischen der Basisstation (BS) und den Mobilfunkstationen (MS) betrieben wird, wobei in dem Verfahren
eine Mobilfunkstation (MS) eine Erlaubnis zum Senden von Benutzerdaten anfordert durch Senden einer Anforderungsnachricht auf dem Steuerkanal an eine Basisstation (BS),
die Basisstation (BS) durch Senden einer Bestätigungsnachricht auf dem Steuerkanal eine Erlaubnis zum Senden der Benutzerdaten erteilt, und
die Mobilfunkstation (MS) eine Benutzerdatennachricht im Ansprechen auf den Empfang der Bestätigungsnachricht sendet,
**dadurch gekennzeichnet, daß**
die Basisstation (BS) nach dem Empfang der Anforderung von der Mobilfunkstation zum Senden von Benutzerdaten einen Befehl an die Mobilfunkstation sendet zum Übergehen auf einen als Steuerkanal betriebenen aber lediglich für die auf die Benutzerdatenübertragung bezogene Signalisierung verwendeten Funkkanal, für eine Datenübertragung.

3. Verfahren zur Datenübertragung in einem Funksystem mit Mobilfunkstationen (MS) und einer Vielzahl von Basisstationen (BS), wobei jede Basisstation einen Funkkanal aufweist, der als Steuerkanal zum Durchführen einer Signalisierung zwischen der Basisstation (BS) und den Mobilfunkstationen (MS) betrieben wird, wobei in dem Verfahren
eine Basisstation (BS) eine Paketdatenübertragungsanforderung an eine Mobilstation (MS) auf dem Steuerkanal sendet, und die Mobilfunkstation (MS) einen Bestätigungsnachricht auf dem Steuerkanal an die Basisstation (BS) sendet,
**dadurch gekennzeichnet, daß**
die Basisstation (BS) nach dem Empfang der Bestätigungsnachricht von der Mobilfunkstation (MS) auf dem Steuerkanal einen Befehl an die Mobilfunkstation sendet zum Übergehen auf einen als Steuerkanal betriebenen aber lediglich zur Signalisierung bezogen auf eine Benutzerdatenübertragung verwendeten Steuerkanal, für eine Datenübertragung.

4. Verfahren nach Anspruch 2 oder 3,
**dadurch gekennzeichnet, daß**
eine Mobilfunkstation (MS) eine Erlaubnis zum Übertragen der Benutzerdaten zu einer anderen Mobilfunkstation anfordert, das Funknetzwerk die Verfügbarkeit der anderen Mobilfunkstation überprüft, und das Funknetz beide Mobilfunkstationen auf den für die Benutzerdatenübertragung reservierten Funkkanal anweist.

5. Verfahren nach Anspruch 2, 3 oder 4,
**dadurch gekennzeichnet, daß**
mehrere Mobilfunkstationen (MS) gleichzeitig auf dem für die Benutzerdatenübertragung reservierten Funkkanal mit der Basisstation (BS) kommunizieren.

6. Verfahren nach Anspruch 5,
**dadurch gekennzeichnet, daß**
die Zahl der gleichzeitig auf dem für die Benutzerdatenübertragung reservierten Funkkanal kommunizierenden Mobilfunkstationen (MS) so gesteuert wird, daß die effektive Übertragungsrate des Funkkanals pro Mobilfunkstation nicht geringer ist als ein vorbestimmter Schwellwert.

7. Verfahren nach einem der Ansprüche 2 bis 6,
**dadurch gekennzeichnet, daß**
die Basisstation (BS) nach der Beendigung der Benutzerdatenübertragung einen Befehl an die Mobilstation (MS) sendet zum Zurückkehren zu dem ursprünglichen Steuerkanal.

8. Verfahren nach einem der Ansprüche 2 bis 6,
**dadurch gekennzeichnet, daß**
die Mobilfunkstation (MS) nach der Beendigung der Benutzerdatenübertragung den wie ein Steuerkanal betriebenen Funkkanal für eine begrenzte Zeitdauer beibehalten darf, um auf eine neue Benutzerdatenübertragung zu warten, falls eine solche Übertragung erwartet wird.

## Revendications

1. Système de radiocommunication, comprenant des stations mobiles de radiocommunication (MS) et une pluralité de stations de base (BS), chaque station de base ayant un canal radio jouant le rôle d'un canal sémaphore pour la signalisation entre la station de base (BS) et les stations mobiles de radiocommunication (MS), les stations mobiles de radiocommunication (MS) étant capables de transmettre des données utilisateur sur un canal sémaphore parmi la signalisation de commande réelle, caractérisé en ce que le système de radiocommunication comprend au moins un canal radio jouant le rôle d'un canal sémaphore mais assigné exclusivement à la signalisation concernant la transmission de données utilisateur et à la transmission de la signalisation de commande, ce qui empêche les stations mobiles de sélectionner ledit canal radio en tant que canal sémaphore.

2. Procédé de transmission de données dans un système de radiocommunication, comprenant des stations mobiles de radiocommunication (MS) et une pluralité de stations de base (BS), chaque station de base ayant un canal radio jouant le rôle d'un canal sémaphore pour la signalisation entre la station de base (BS) et les stations mobiles de radiocommunication (MS), procédé dans lequel
une station mobile de radiocommunication (MS) demande à une station de base (BS) la permission d'envoyer des données utilisateur en envoyant un message de demande sur le canal sémaphore,
la station de base (BS) accorde la permission d'envoyer des données utilisateur en envoyant un message d'accusé réception sur le canal sémaphore, et
la station mobile de radiocommunication (MS) envoie un message de données utilisateur en réponse à la réception du message d'accusé réception,
caractérisé en ce que, après avoir reçu de la station mobile de radiocommunication la demande d'envoi de données utilisateur, la station de base (BS) envoie à la station mobile de radiocommunication une instruction d'aller, pour une transmission de données, vers un canal radio jouant le rôle d'un canal sémaphore, mais utilisé seulement pour la signalisation concernant la transmission de données utilisateur.

3. Procédé de transmission de données dans un système de radiocommunication, comprenant des stations mobiles de radiocommunication (MS) et une pluralité de stations de base (BS), chaque station de base ayant un canal radio jouant le rôle d'un canal sémaphore pour la signalisation entre la station de base (BS) et les stations mobiles de radiocommunication (MS), procédé dans lequel
une station de base (BS) envoie à une station mobile (MS), sur le canal sémaphore, une demande de transmission de données par paquets,
la station mobile de radiocommunication (MS) envoie à la station de base (BS), sur le canal sémaphore, un message d'accusé réception,
caractérisé en ce que, après avoir reçu le message d'accusé réception de la station mobile de radiocommunication (MS) sur le canal sémaphore, la station de base (BS) envoie à la station mobile de radiocommunication une instruction d'aller, pour une transmission de données, vers un canal radio jouant le rôle d'un canal sémaphore, mais utilisé seulement pour la signalisation concernant la transmission de données utilisateur.

4. Procédé selon la revendication 2 ou 3, caractérisé en ce qu'une station mobile de radiocommunication (MS) demande la permission de transmettre des données utilisateurs à une autre station mobile de radiocommunication, le réseau radio vérifie la disponibilité de l'autre station mobile de radiocommunication, et le réseau radio donne aux deux stations mobiles de radiocommunication l'instruction d'aller vers le canal radio réservé à la transmission de données utilisateur.

5. Procédé selon la revendication 2, 3 ou 4, caractérisé en ce que plusieurs stations mobiles de radiocommunication (MS) communiquent simultanément avec la station de base (BS) sur ledit canal radio réservé à la transmission de données utilisateur.

6. Procédé selon la revendication 5, caractérisé en ce que le nombre de stations mobiles de radiocommunication (MS) qui communiquent simultanément sur ledit canal radio réservé à la transmission de données utilisateur est régulé de telle sorte que le débit de transmission effectif dudit canal radio par station mobile de radiocommunication ne soit pas inférieur à une valeur de seuil prédéterminée.

7. Procédé selon l'une quelconque des revendications 2 à 6, caractérisé en ce que, après la fin de la transmission de données utilisateur, la station de base (BS) envoie à la station mobile (MS) une instruction de retour au canal sémaphore d'origine.

8. Procédé selon l'une quelconque des revendications 2 à 6, caractérisé en ce que, après la fin de la transmission de données utilisateur, la station mobile de radiocommunication (MS) est autorisée à rester pendant un temps limité sur le canal radio jouant le rôle d'un canal sémaphore, afin d'attendre une nouvelle transmission de données utilisateur, si cette transmission est attendue.
